# EUROPEAN PATENT APPLICATION

(11) **EP 2 540 673 A1**
(43) Date of publication of application: **02.01.2013**
(21) Application number: 11747169.8
(22) Date of filing: 07.02.2011
(51) Int. Cl.: C02F 1/32, B01D 53/86, B01D 61/14, B01J 35/02, C02F 1/20, C02F 1/42, C02F 1/44, C02F 1/72, C02F 9/00

(54) **ULTRAVIOLET OXIDATION DEVICE, ULTRAPURE WATER PRODUCTION DEVICE USING SAME, ULTRAVIOLET OXIDATION METHOD, AND ULTRAPURE WATER PRODUCTION METHOD**

(30) Priority: 28.09.2010 JP 2010217125; 24.02.2010 JP 2010038204
(71) Applicant: Ube Industries, Ltd., Ube-shi Yamaguchi 755-8633 (JP)
(72) Inventor: OTANI, Shinichirou, Ube-shi Yamaguchi 755-8633 (JP); YAMAOKA, Hiroyuki, Ube-shi Yamaguchi 755-8633 (JP); HARADA, Yoshikatsu, Ube-shi Yamaguchi 755-8633 (JP); FUJII, Teruaki, Ube-shi Yamaguchi 755-8633 (JP); SUHARA, Sadayoshi, Ube-shi Yamaguchi 755-8633 (JP); SUYAMA, Kouichirou, Ube-shi Yamaguchi 755-8633 (JP)
(74) Representative: Grünecker, Kinkeldey, Stockmair & Schwanhäusser
(86) International application number: PCT/JP2011/052562
(87) International publication number: WO 2011/105205

(57) **Abstract**

Disclosed is an ultraviolet oxidation device for decompositing organic materials present in water in low energy consumption and low cost, an ultrapure water production device using the same, an ultraviolet oxidation method, and an ultrapure water production method. An ultraviolet oxidation device including: a flow tank 10; photocatalyst fibers 12; an ultraviolet radiating unit 14; and an ultraviolet radiating unit housing unit 16 which is arranged to occupy an entire cross-section of the flow tank intersecting with flowing direction of the water to be processed in the flow tank 10; wherein the ultraviolet radiating unit housing unit 16 is constructed such that the water to be processed flows toward the ultraviolet radiating unit 14 from an upstream side, and after flowing in the housing unit 16, the water to be processed flows out to a downstream side, and is formed of a material that allows the ultraviolet rays from the ultraviolet radiating unit 14 to radiate the photocatalyst fibers 12.

## Description

### TECHNICAL FIELD

The present invention relates to an ultraviolet oxidation device for oxidative decomposing organic materials present in water to be processed using ultraviolet rays, an ultrapure water production device using the same, an ultraviolet oxidation method, and an ultrapure water production method.

### BACKGROUND ART

In recent years, ultrapure water in which impurities such as organic materials and various ions are reduced to very low level is utilized as washing water in the field of semiconductor production industry, etc., and amount thereof increases. In the producing process of the ultrapure water, even organic materials of total organic carbon content (TOC) of ppb level in water come into question. Recently, therefore, a method for removing trace of organic content from water is under consideration. For example, a number of techniques are proposed as techniques of removing TOC in water, which use a combination of a ultraviolet radiation lamp and photocatalyst, and it is also considered to apply these techniques to an ultraviolet oxidation device.

For example, Patent document 1 discloses a method in which hydrogen peroxide or ozone is added to liquid such as ultrapure water and the liquid is irradiated with ultraviolet rays from an ultraviolet radiation lamp, etc., in the presence of photocatalyst of anatase type, etc., to decompose TOC component in the liquid such as ultrapure water. Patent document 2 discloses an apparatus in which an ultraviolet radiation lamp and an ultraviolet treatment tank having photocatalyst on the inner wall thereof are combined and air bubbling is generated near the ultraviolet radiation lamp to promote oxidation of the organic materials. Patent document 3 discloses a combination of bypath means and a photocatalytic filter in addition to an ultraviolet radiation lamp.

### PRIOR DOCUMENT

### PATENT DOCUMENT

Patent document 1: JP A-10-151450
Patent document 2: JP 2888185
Patent document 3: JP A-2009-18282

### SUMMARY OF THE Invention

### PROBLEMS TO BE SOLVED BY THE INVENTION

However, oxidation treatment using the ultraviolet radiation lamp has various problems that power consumption of the ultraviolet radiation lamp is large, that a distance between the ultraviolet radiation lamp and an inner wall of an ultraviolet oxidation device must be short in order to obtain a sufficient oxidation effect, that though the ultraviolet radiation lamp has a lifetime and must be replaced periodically, it is expensive, and that running costs are expensive because adding of hydrogen peroxide to water and bubbling of air, ozone and the like are necessary in order to obtain a sufficient oxidation effect by radiation of ultraviolet rays.

Further, the method of using hydrogen peroxide or ozone together with the ultraviolet radiation lamp disclosed in Patent document 1 has problems that running cost is increased and an apparatus is complicated since hydrogen peroxide or ozone must be removed downstream the ultraviolet radiation device. The method of holding the photocatalyst on the inner wall of the ultraviolet treatment tank disclosed in Patent document 2 has a problem that since treated water flows out from the ultraviolet treatment apparatus without bringing the TOC component into contact with the photocatalyst, decomposition efficiency of the TOC component may become extremely low. The technique disclosed in Patent document 3 has a problem that where the photocatalytic filter is arranged at an angle of 45 degree to 135 degree with the ultraviolet radiation lamp, ultraviolet rays radiated from the direction perpendicular to the ultraviolet radiation lamp is not necessarily used effectively.

Therefore, it is an object of the present invention is to provide an ultraviolet oxidation device for decompositing organic materials present in water in low energy consumption and low cost, an ultrapure water production device using the same, an ultraviolet oxidation method, and an ultrapure water production method.

### MEANS FOR SOLVING THE OBJECT

In order to attain the above object, the present inventors have studied and found that an ultraviolet radiating unit housing unit which houses an ultraviolet radiating unit is arranged to occupy an entire cross-section of the flow tank intersecting with flowing direction of a water to be processed in a flow tank such that the water to be processed flows toward the ultraviolet radiating unit which houses the ultraviolet radiating unit from an upstream side in the housing unit, and after flowing in the housing unit, the water to be processed flows out to a downstream side, whereby organic materials present in the water can be effectively and safely decomposed in a low energy consumption and low cost.

Namely, the present invention provides an ultraviolet oxidation device characterized by comprising: a flow tank for flowing a water to be processed in one direction; photocatalyst fibers arranged in the flow tank in a manner such that the water to be processed can pass therethrough; an ultraviolet radiating unit which can radiates ultraviolet rays; and an ultraviolet radiating unit housing unit which houses the ultraviolet radiating unit and is arranged to occupy an entire cross-section of the flow tank intersecting with flowing direction of the water to be processed in the flow tank; wherein the ultraviolet radiating unit housing unit is constructed such that the water to be processed flows toward the ultraviolet radiating unit from an upstream side, and after flowing in the housing unit, the water to be processed flows out to a downstream side, and the ultraviolet radiating unit housing unit is formed of a material that allows the ultraviolet rays from the ultraviolet radiating unit to radiate the photocatalyst fibers.

In the ultraviolet oxidation device of the present invention, it is preferred that the ultraviolet radiating unit housing unit includes an inner pipe for housing the ultraviolet radiating unit and an outer pipe covering the inner pipe, and a space between the inner pipe and the outer pipe is a range of 1 to 10 mm in a radial direction.

Further, in the ultraviolet oxidation device of the present invention, it is preferred that the inner pipe and the outer pipe are formed of a material which allows the ultraviolet rays having wavelength of 180 to 190 nm and wavelength of 250 to 260 nm to transmit therethrough, and the ultraviolet radiating unit is constituted such that it can radiate ultraviolet rays having both of a peak wavelength of 180 to 190 nm and a peak wavelength of 250 to 260 nm.

Still further, in the ultraviolet oxidation device of the present invention, it is preferred that the ultraviolet radiating unit is formed into an elongated shape, the photocatalyst fibers are formed into a flat plate, and a longitudinal direction of the ultraviolet radiating unit is parallel with a plane direction of the photocatalyst fibers.

Further, the present invention provides an ultrapure water production device characterized by comprising: a reverse osmosis film device for removing impurities in a water to be processed; an ion exchange device for removing ion components in the water to be processed in which the impurities are removed, which is arranged downstream the reverse osmosis film device; the ultraviolet oxidation device for decomposing organic components in the water to be processed in which the ion components are removed, which is arranged downstream the ion exchange device; a mixed bed ion exchange device for removing ion components generated in the water to be processed by decomposition of the organic components by the ultraviolet oxidation device, which is arranged downstream the ultraviolet oxidation device, and an ultrafiltration device for removing particulate matters in the water to be processed generated by treatment through process after step using the reverse osmosis film device, which is arranged downstream the mixed bed ion exchange device.

The ultrapure water production device of the present invention may further comprises a degassing device for removing a gas in the water to be processed, which is arranged upstream the ultrafiltration device, and it is preferred that the degassing device is arranged at least between the reverse osmosis film device and the ion exchange device, and between the ion exchange device and the ultrafiltration device.

By arranging the degassing device, it is possible to reduce the amount of dissolved oxygen that is a problem in the ultrapure water used in the semiconductor industry. Further, by arranging the degassing device upstream the ion exchange device, it is possible to reduce gases such as carbon dioxide thereby to lengthen the lifetime of the ion exchange device. Furthermore, it is possible to reduce the amount of dissolved oxygen that is a problem in the ultrapure water used in the semiconductor industry.

Further, the present invention provides an ultraviolet oxidation method for oxidation decomposing organic materials contained in a water to be processed which flows in a flow tank including photocatalyst fibers which allows the water to be processed to pass therethrough, an ultraviolet radiating unit which can radiates ultraviolet rays, and an ultraviolet radiating unit housing unit which houses the ultraviolet radiating unit, and though which the water to be processed can flow, characterized by comprising: allowing the water to be processed to pass through the photocatalyst fibers while the photocatalyst fibers are irradiated with ultraviolet rays from the ultraviolet radiating unit; and allowing the water to be processed to pass through the ultraviolet radiating unit housing unit while the water to be processed is irradiated with ultraviolet rays from the ultraviolet radiating unit.

Further, the present invention provides an ultrapure water production method comprising: an impurity removing step for removing impurities in a water to be processed; a first ion component removing step for removing ion components in the water to be processed, which is treated in the impurity removing step; an organic component decomposing step for decomposing organic components in the water to be processed, which is treated in the first ion component removing step, by the ultraviolet oxidation method; a second ion component removing step for removing ion components in the water to be processed, generated in the organic component decomposing step; and a particulate matter removing step for removing a particulate matter in the water to be treated, generated through process after the impurity removing step.

### ADVANTAGE OF THE INVENTION

As described above, according to the present invention, there is provided an ultraviolet oxidation device that can decompose effectively and safely organic materials present in water in low energy consumption and low cost, an ultrapure production device using the same, an ultraviolet oxidation method, and an ultrapure water production method.

### BRIEF DESCRIPTION OF THE DRAWINGS

[FIG. 1] FIG. 1 is a conceptual sectional front view showing an ultraviolet oxidation device according to an embodiment of the present invention.
[FIG. 2] FIG. 2 is a sectional view cut along A-A' line of FIG. 1.
[FIG. 3] FIG. 3 is a perspective view showing a photocatalyst cartridge used in the ultraviolet oxidation device according to an embodiment.
[FIG. 4] FIG. 4 is a perspective sectional view showing a partial cutout of a double pipe and the neighborhood thereof in the ultraviolet oxidation device in which an ultraviolet radiation lamp is removed.
[FIG. 5] FIG. 5 is a front view showing an ultraviolet oxidation device according to Examples.

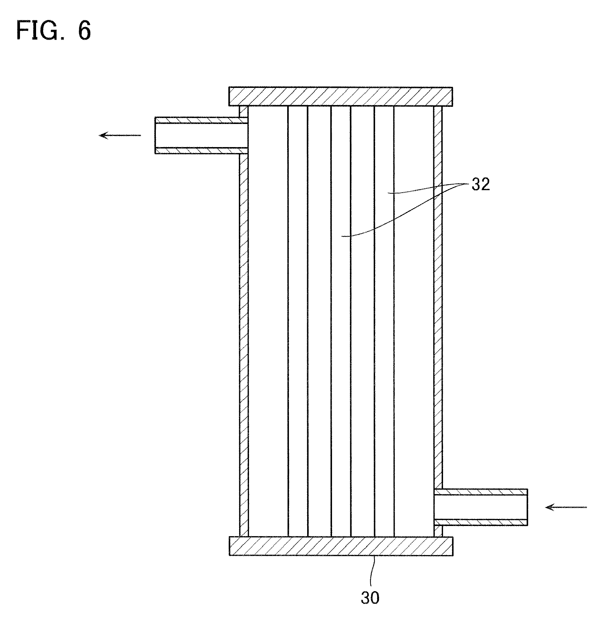

[FIG. 6] FIG. 6 is a conceptual view showing the prior ultraviolet oxidation device.
[FIG. 7] FIG. 7 is a conceptual view showing an ultrapure water production device of the present invention.

### DETAILED DESCRIPTION OF THE EMBODIMENTS

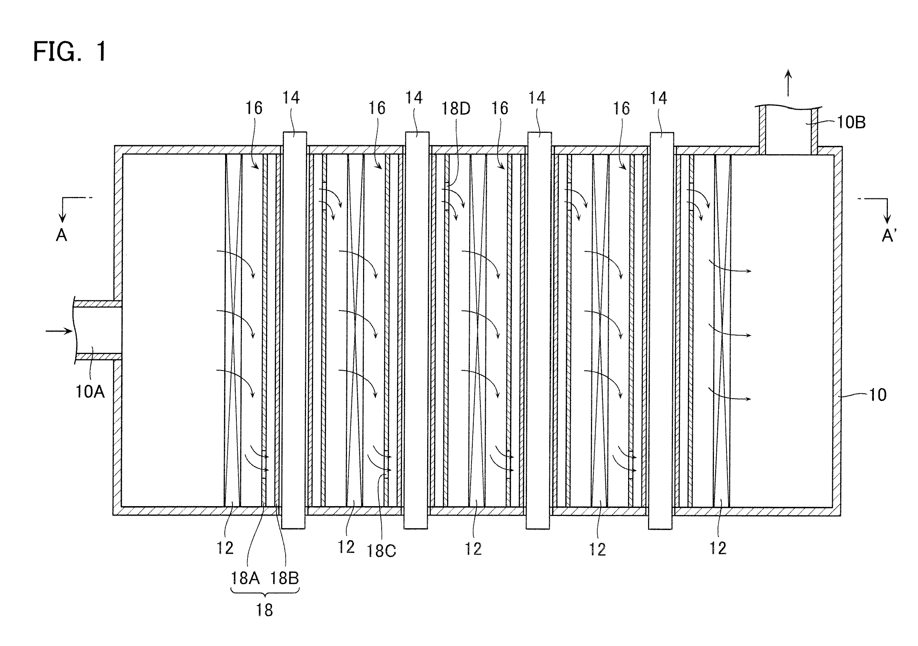

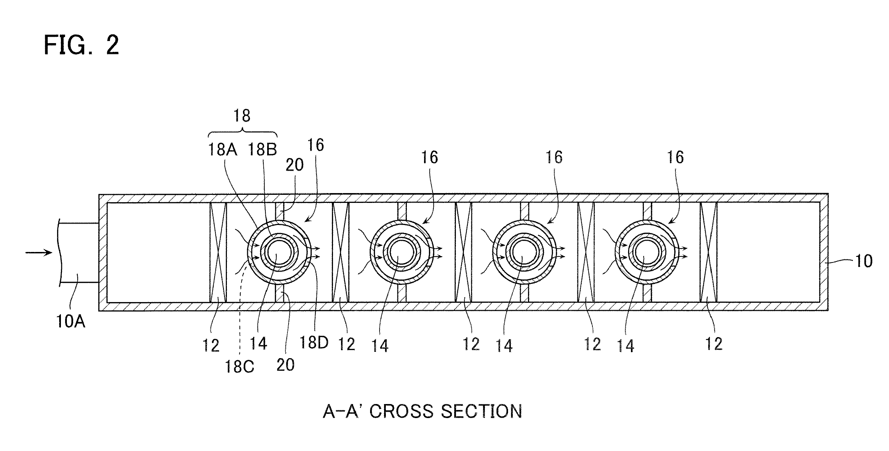

Next, there will be an ultraviolet oxidation device according to embodiments of the present invention. As shown in FIGs. 1 and 2, an ultraviolet oxidation device according to an embodiment comprises a flow tank 10 in which a water to be processed flows in one direction, a photocatalyst cartridge 12 which is formed of fibers having a photocatalytic function, and through which the water to be processed flowing in the flow tank 10 can pass, an ultraviolet radiation lamp 14 for radiating ultraviolet rays to the water to be processed flowing in the flow tank 10, and an ultraviolet radiation lamp housing member 16 which housed the ultraviolet radiation lamp 14 and is arranged to occupy an entire cross-section of the flow tank intersecting with flowing direction of the water to be processed in the flow tank 10.

The flow tank 10 is constructed such that the water to be processed flows from an inlet 10A formed on a side surface in upstream side (left side surface in FIGs. 1 and 2) to an outlet 10B formed on an upper surface in downstream side (right side in FIG. 1)

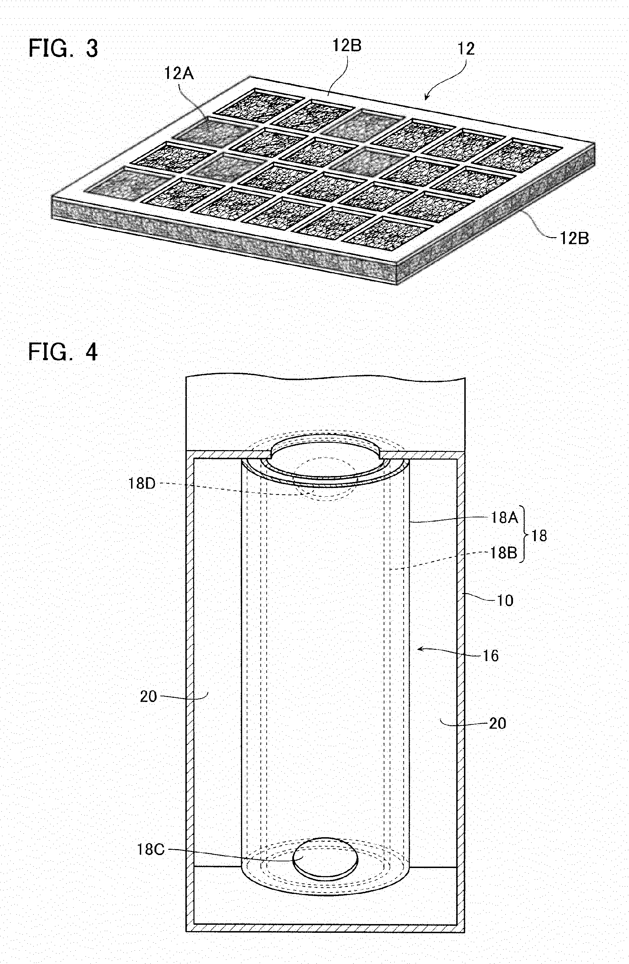

The photocatalyst cartridges 12 are arranged in the flow tank 10 such that five cartridges line up in parallel to each other along flowing direction of the water to be processed, to occupy an entire cross-section of the flow tank intersecting perpendicularly with the flowing direction. As shown in Fig.3, each photocatalyst cartridge 12 includes a flat non-woven fabric 12A and a pair of wire screens 12B, 12B, with the flat non-woven fabric 12A being sandwiched between the wire screens 12B, 12B made of stainless. By constructing a cartridge structure using the wire screens 12B, 12B as support members, it is possible to replace easily the flat non-woven fabric 12A degraded in a photocatalytic function. By connecting a plurality of the photocatalyst cartridge by means of frames, etc., to form a multi-stage structure, fitting and removing of the photocatalyst cartridge can be easily performed. In the present embodiment, though five photocatalyst cartridges are arranged, any number of photocatalyst cartridges may be arranged depending on water quality to be demanded, etc., and for example, 1 to 50 photocatalyst cartridges may be employed. Further, though the flat non-woven fabric 12A is fixed to the flow tank 10 as the photocatalyst cartridge 12 in the present embodiment, it may be arranged by the other means. Furthermore, though the photocatalyst cartridges 12 are arranged so as to cross perpendicular to the flow direction of the water in the present embodiment, they may be arranged obliquely at a angle of about 10 degree, preferably about 5 degree, since it suffices that the water pass effectively through the flat non-woven fabric 12A.

The ultraviolet radiation lamps 14 are formed into cylindrical shape and provided with a cover member (not shown) of cylindrical shape formed on the outer surface thereof. The cover member is made of a material having permeability to not only a light with peak wavelength of 250-260 nm, but also a light with peak wavelength of 180-190 nm, for example synthetic quartz. Though a general low-pressure hydrogen lamp can radiate a light with two peak wavelengths of 185 nm and 254 nm, it radiates a light with only a peak wavelength of 254 nm since glass constituting the conventional cover member is not permeable to ultraviolet rays. In the ultraviolet oxidation device of the present embodiment, the cover member is made of special material as described above, whereby the ultraviolet radiation lamps 11 is constituted such that they can radiate ultraviolet rays with peak wavelengths of 180-190 nm and 250-260 nm. Ultraviolet rays radiated from the ultraviolet radiation lamps 11 have a peak wavelength of 180-190 nm, preferably 185 nm, and a peak wavelength of 250-260 nm, preferably 254 nm.

Four ultraviolet radiation lamp housing members 16 are arranged one by one between the flat non-woven fabrics 12 in the flow tank 10. The ultraviolet radiation lamp housing members 16 are arranged over the region extending from the bottom surface to the upper surface of the flow tank 10, and are constituted by a double pipe 18 housing the cylindrical ultraviolet radiation lamp 14, and a pair of dividing plate 20, 20 arranged to occupy an entire cross-section of the flow tank intersecting perpendicularly with the flowing direction of the water to be processed between the double pipe 18 and the flow tank 10. As shown in Figs. 1, 2, and 4, the double pipe 18 formed into a cylindrical shape, includes an outer pipe 18A and an inner pipe 18B, and made of a material having permeability to not only a light with peak wavelength of 250-260 nm, but also a light with peak wavelength of 180-190 nm, for example synthetic quartz. A space in radial direction between the outer pipe 18A and inner pipe 18B is preferably 10 mm or less, particularly preferably 3 to 8 mm. An inflow port 18C is formed under that portion of the outer pipe 18B in the double pipe 18 which positions in upstream side than the dividing plate 20 so as to penetrate into the region between the outer pipe 18A and inner pipe 18B. Similarly, outflow port 18D is formed above in downstream side than the dividing plate 20 so as to penetrate into the region between the outer pipe 18A and inner pipe 18B. By thus constructing the ultraviolet radiation lamp housing members 16, the water to be processed flowing in the flow tank 10 necessarily flows in toward the ultraviolet radiation lamp 14 from the inflow port 18C in the upstream side of the double pipe 18 and flows out from outflow port 18D to the downstream side through the region between the outer pipe 18A and inner pipe 18B.

The ultraviolet radiation lamp 14 is arranged so as to position in the center of the inner pipe 18B of each double pipe 18. Four ultraviolet radiation lamps 14 are arranged in the entire ultraviolet oxidation device of the present embodiment. As the each ultraviolet radiation lamp 14 is arranged between the photocatalyst cartridges 12, it can radiate ultraviolet rays on both sides of the flat non-woven fabric 21 furnished in the photocatalyst cartridges 12.
The ultraviolet radiation lamps 20 are arranged in parallel to each other such that the direction of the axis is in parallel to the photocatalyst cartridge 12. Incidentally, though the cover member of the ultraviolet radiation lamp 14 is formed into cylindrical shape in the present embodiment, the present invention is not limited to this, and any elongated shape may be employed. The number of the ultraviolet radiation lamps 14 is determined depending on demanded water quality, amount of needless organic materials contained the treated water and the like. Though the double pipe 18 is formed into cylindrical shape in the present embodiment, any shape may be employed if the ultraviolet radiation lamp 14 can be arranged at the center thereof.

The flat non-woven fabric 12A used in the ultraviolet oxidation device of the present embodiment is formed of silica based composite oxide fibers which are composite oxide including an oxide phase containing mainly silica component (first phase) and a metal oxide phase containing Ti (second phase), and is formed of photocatalyst fibers in which an existence ratio of Ti of the metal oxide constituting the second phase increases slantingly toward a surface layer of the fiber.

If necessary, the surface of the photocatalyst fiber has at least one metal selected from platinum (Pt), palladium (Pd), ruthenium (Ru), rhodium (Rh), gold (Au), silver (Ag), copper (Cu), iron (Fe), nickel (Ni), zinc (Zn), gallium (Ga), germanium (Ge), indium (In) and tin (Sn) supported thereon. Though the method for supporting the metal thereon is not particularly limited, the following method may be employed. In this method, the metal is supported by irradiating with light having energy equal to or more than the energy corresponding to the band gap of the metal oxide constituting the second phase, while a liquid containing metal ions to be supported is contacted with the photocatalyst fiber.

The first phase is an oxide phase containing mainly a silica component, and may be amorphous or crystalline. The first phase may contain a metal element or a metal oxide that can be combined with silica to produce a solid solution or eutectic point compound. The metal element (A) that can be combined with silica to produce a solid solution includes for example titanium and the like. The metal element (B), the oxide of which can be combined with silica to produce a solid solution includes for example aluminum, zirconium, yttrium, lithium, sodium, barium, calcium, boron, zinc, nickel, manganese, magnesium, iron and the like.

The first phase constitutes an inner phase of the silica based composite oxide fiber, and plays an important role in the mechanical properties. The existence ratio of the first phase relative to the silica based composite oxide fiber ranges preferably 40 to 98 weight %. In order to exert the aimed function of the second phase and to obtain higher mechanical strength, it is more preferable to control the existence ratio of the first phase to 50 to 95 weight %.

On the other hand, the second phase is a metal oxide phase containing titanium, and plays an important role in exerting a photocatalytic function. The metal constituting metal oxide includes titanium. This metal oxide may be a simple substance, a eutectic point compound, or a solid solution of a substitution type in which a prescribed element is substituted. The second phase constitutes the surface layer of the silica based composite oxide fiber. The existence ratio of the second phase relative to the silica based composite oxide fiber changes depending on the kind of the metal oxide and ranges preferably 2 to 60 weight %. In order to exert the function of the second phase and to obtain higher mechanical strength, it is more preferable to control the proportion of the second phase to 5 to 50 weight %. A crystal diameter of metal oxide containing titanium of the second phase is preferably 15 nm or less, particularly preferably 10 nm or less.

The existence ratio of Titanium of metal oxide contained in the second phase increases slantingly toward the surface of the silica based composite oxide fibers. The thickness of the region that is recognizable as an apparent gradient composition is controlled to preferably 5 to 500 nm, and may range to about 1/3 of the fiber diameter. Incidentally, "existence ratio" in the first and second phases means weight % of metal oxide of the first phase or metal oxide of the second phase relative to the total weights of the metal oxides constituting the first and second phases, namely the entire weight of the silica based composite oxide fibers.

Intensity of ultraviolet rays on the flat non-woven fabric ranges preferably 1 to 10 mW/cm², more preferably 2 to 8 mW/cm² in the ultraviolet oxidation device. When the intensity of ultraviolet rays on a surface of the flat non-woven fabric ranges preferably 1 to 10 mW/cm², it is possible to perform effectively water treatment by two components of ultraviolet rays. In order to obtain the range of the average intensity of ultraviolet rays, the distance between the ultraviolet radiation means and the flat non-woven fabric can be set to proper range. The average intensity of ultraviolet rays can be determined by measuring the intensity of ultraviolet rays in a plurality of points between central part and edge part on the surface of the flat non-woven fabric and averaging these measured values.

The photocatalyst fibers having the gradient structure described above can be produced by known methods such as the method described in WO2009/63737.

Next, there will be described a method of performing an ultraviolet oxidation using an ultraviolet oxidation device of the present embodiment. In order to purify the water to be processed containing needless organic materials, at first, the water to be processed is introduced into the flow tank 10 through the inlet 10A. The introduced water to be processed is discharged out of the flow tank 10 through the outlet 10B. Since the flat non-woven fabric 12A has a structure in which the fibers are dispersed so as to form some spaces among the fibers, when water pass, a contact area between the water to be processed and the photocatalyst becomes extremely large. For that reason, radicals are effectively generated by the photocatalytic function of the flat non-woven fabric 12A to decompose the needless organic materials. Where both faces of front and back of the flat non-woven fabric 12A formed of the photocatalyst fibers are irradiated with ultraviolet rays, radicals can be further effectively generated. Where the whole amount of the water to be processed are forcibly run from the inflow port 18A to the out flow port 18B of the double pipe 18 through the neighborhood of the ultraviolet radiation lamp 14, it is irradiated effectively to the whole amount of the water to be processed with ultraviolet rays with wavelength of 185 nm to decompose efficiently the needled organic materials.

Usually, a black light fluorescent lamp with wavelength of 351 nm or germicidal lamp with wavelength of 254 nm is employed as an ultraviolet radiation lamp in the ultraviolet oxidation device utilizing a titanium oxide photocatalyst. These lamps can be employed for reasons that the titanium oxide photocatalyst can be excited by a light having wavelength of 387 nm or less, and these lamps are readily available as products. In the ultraviolet oxidation device according to the present embodiment, high decomposition efficiency can be obtained by utilizing ultraviolet rays that has been not used until now and by employing the photocatalyst in a prescribed arrangement. That is, since the flat non-woven fabric formed of photocatalyst fiber and the ultraviolet radiation means for radiating ultraviolet rays having peak wavelengths in ranges of 180 to 190 nm and 250 to 260 nm, which is arranged in parallel to the flat non-woven fabric, are used in the ultraviolet oxidation device according to the present embodiment, the ultraviolet rays with wavelengths of 180 to 190 nm is not shielded with the photocatalyst while maintaining photo-radiating efficiency to the photocatalyst and the contact efficiency with the processing fluid. Further, since the whole amount of the water to be processed are forcibly run through the neighborhood of the ultraviolet radiation lamp 14 by using the double pipe made of quartz, the whole amount of the water to be processed are irradiated with the ultraviolet rays with wavelengths of 180 to 190 nm. For this reason, when the flat non-woven fabric is irradiated with ultraviolet rays having a wavelength of 250 to 260 nm to excite the photocatalyst and to generate OH radicals, thereby decomposing the organic material, and then irradiated with ultraviolet rays having a wavelength of 180 to 190 nm to directly decomposing the organic material in water, thereby improving the decomposition effect relative to that of the prior ultraviolet oxidation device. By incorporating the ultraviolet oxidation device of the present embodiment into the producing line of ultrapure water, it is possible to obtain ultrapure water of high quality at a large reduced coat of power consumption.

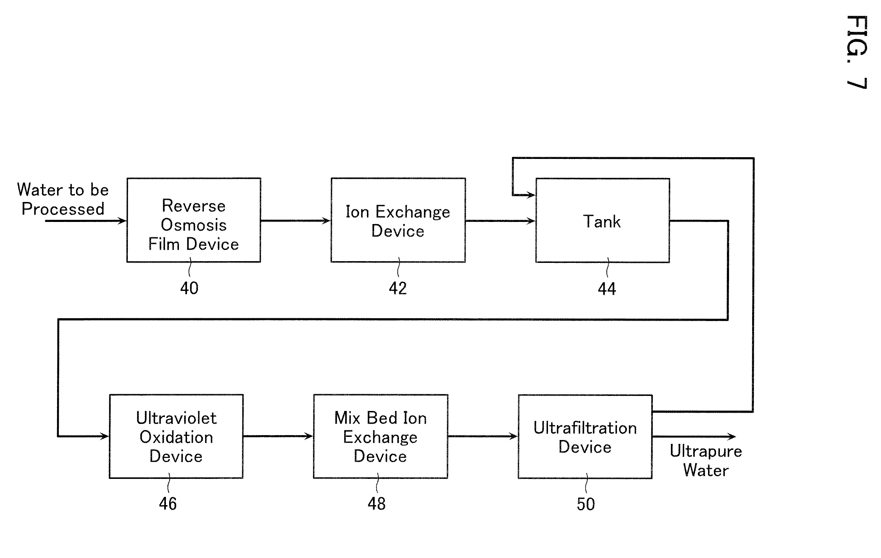

Next, there will be described an ultrapure water production device of an embodiment using the ultraviolet oxidation device of the above embodiment. The ultrapure water production device of this embodiment is constructed by incorporating the ultraviolet oxidation device of the above embodiment. Namely, as shown in FIG. 7, the ultrapure water production device of the present embodiment includes a reverse osmosis film device 40 for removing impurities in water to be processed, an ion exchange device 42 for removing ion components in the water to be processed from which the impurities are removed by the reverse osmosis film device 40, that is arranged downstream the reverse osmosis film device 40, a tank 44 for storing the recycling water to be processed, that is arranged downstream the ion exchange device 42, an ultraviolet oxidation device 46 for decomposing impurities in the water to be processed from which the ion components are removed by the ion exchange device 42, that is arranged downstream the tank 44, a mix bed ion exchange device 48 for removing ion components generated in the water to be processed by decomposing organic components of the ultraviolet oxidation device 46, that is arranged downstream the ultraviolet oxidation device 46, and an ultrafiltration device 50 for removing particulate matters generated in the water to be processed by treatment after step using the reverse osmosis film device 40, that is arranged downstream the mix bed ion exchange device 48.

In the ultrapure water production device of the present embodiment, the water to be processed flows through the following route: reverse osmosis film device 40 → ion exchange device 42 → tank 44 → ultraviolet oxidation device 46 → mix bed ion exchange device 48 → ultrafiltration device 50. A part of the water to be processed may be also recycled to the tank 44 after treatment by the ultrafiltration device 50 in order to sufficiently reduce TOC (total organic carbon content). Namely, the water to be processed may flow through the following route: tank 44 → ultraviolet oxidation device 46 → mix bed ion exchange device 48 → ultrafiltration device 50 → tank 44. According to the ultrapure water production device of the present embodiment, when the water to be processed is treated by the reverse osmosis film device 40, impurities such as ion components and salts, etc., contained in the water to be processed are removed, when treated by the ion exchange device 42, ion components contained in the water to be processed are removed, when treated by the ultraviolet oxidation device 46, organic components contained in the water to be processed are decomposed, when treated by the mix bed ion exchange device 48, ion components generated in the water to be processed are removed, and when treated by the ultrafiltration device 50, particulate matters generated in the water to be processed while flowing are removed, thus obtaining ultrapure water containing sufficiently reduced TOC (total organic carbon content). In the prior ultrapure water production system, urea is remained in the obtained ultrapure water unless special device for removing urea is provided. On the contrary, since the ultrapure water production device of the present invention is provided with the ultraviolet oxidation device of the present invention, it is possible to reduce urea to 1 ppb or less even if 100 ppb of urea is contained in the water to be treated.

In the ultrapure water production device of the present embodiment, if necessary, known pretreatment device for removing organic materials, hard water components (Ca component, Mg component), particulate matter, etc., present in water to be processed may be arranged, and the water treated by the pretreatment device may be introduced into the reverse osmosis film device 40. The known pretreatment device includes for example, where clean water is used as water to be processed, a device performing a treatment of the following route: activated carbon → water softening device → filter.

Further, in the ultrapure water production device of the present embodiment, at least one degassing device may be arranged between the ion exchange device 42 and the ultrafiltration device 50. According to this arrangement, it is possible to reduce the amount of dissolved oxygen which is a problem in the ultrapure water used in the semiconductor industry. Still further, in the ultrapure water production device of the present embodiment, if necessary, at least one degassing device may be further arranged between the reverse osmosis film device 40 and the ion exchange device 42. According to this arrangement, it is possible to reduce gases such as carbon dioxide present in water to lengthen the lifetime of the ion exchange device. Furthermore, it is possible to reduce the amount of dissolved oxygen which is a problem in the ultrapure water used in the semiconductor industry.

### EXAMPLE

There will be described Example of the ultraviolet oxidation device according to the present invention and the ultrapure water production device using the same.

### (Production Example 1)

Into a three-necked flask of 5 L volume were charged 2.5 L of anhydrous toluene and 400 g of metallic sodium, and then the contents were heated up to the boiling point of toluene in the gas flow of nitrogen gas. 1 L of dimethyldichlorosilane was added thereto dropwise over one hour. After the end of the addition, the solution was heated and refluxed for 10 hours to produce a precipitate. This precipitate was filtrated, and washed with methanol and water in turn to yield 420 g of white powder of a polydimethylsilane. Into a three-necked flask equipped with a water-cooling condenser was charged 250 g of the resultant polydimethylsilane, and then the polydimethylsilane was heated to be caused to react at 420°C for 30 hours in the flow of nitrogen gas to yield a polycarbosilane having a number-average molecular weight of 1200.

To 16 g of the polycarbosilane synthesized by the above method were added 100 g of toluene and 64 g of tetrabutoxytitanium, and the solution was preliminarily heated at 100°C for 1 hour. Thereafter, the temperature thereof was gently raised to 150°C, and continuously the components were caused to react with each other for 5 hours to synthesize a modified polycarbosilane. In order to cause this modified polycarbosilane and a low molecular weight organometallic compound to coexist intentionally, 5 g of tetrabutoxytitanium was added to the modified polycarbosilane so as to yield a mixture of the modified polycarbosilane and the low molecular weight organometallic compound.

The mixture of the modified polycarbosilane and the low molecular weight organometallic compound was dissolved into toluene, and then the solution was charged into a melt-blow spinning machine. The inside thereof was sufficiently purged with nitrogen, and then the temperature was raised to distill off toluene. The mixture was then spun at 180°C. The resultant spun yarn was stepwise heated to 150°C in air to be made cured. Thereafter, the fibers were fired at temperatures of 1200°C, respectively, in air for 1 hour to yield titania/silica fibers as photocatalyst fibers.

The photocatalyst fibers obtained by the Production Example 1 has 80 wt% of the existence ratio of the first phase and 20 wt% of the existence ratio of the second phase. The contents were determined by fluorescent X-rays analysis. A crystal particle of Titania contained in the second phase has a diameter of 8 nm. The particle diameter was determined by TEM (observation by transmission electron microscope). Titanium of metal oxide has a gradient composition of the existence ratio at a depth of 300 nm from the surface of the photocatalyst fibers. The depth of the gradient composition was determined by Auger spectroanalysis.

### (Example 1)

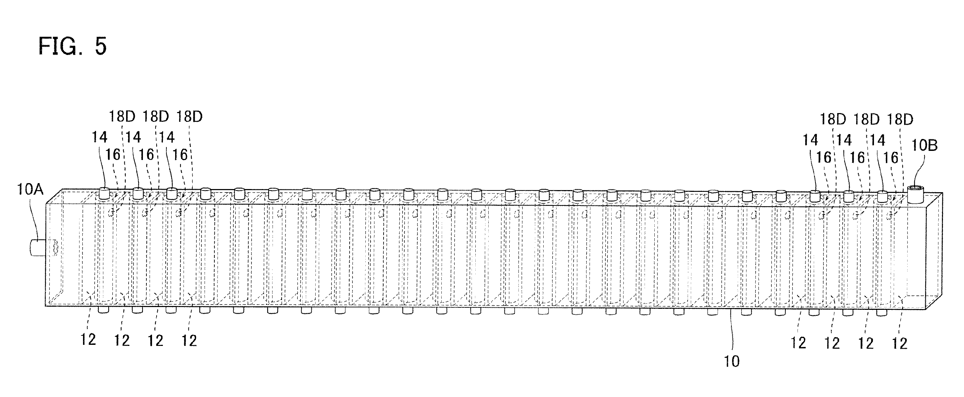

The titania/silica fibers obtained by the Production Example 1 was formed into a flat non-woven fabric to produce a photocatalyst cartridge provided therewith, and an ultraviolet oxidation device including the photocatalyst cartridge was manufactured as shown in FIG. 5. 24 units of ultraviolet radiation lamps each of 60 W were employed and each radiates ultraviolet rays having peak wavelengths of 254 nm and 185 nm. The distance between the ultraviolet radiation lamp and the flat non-woven fabric was 90 mm and an average intensity of ultraviolet rays on the surface of the flat non-woven fabric was 2 mW/cm². After a clean water was treated by a known coagulation filter device, two-bed three-column ion exchange device, and reverse osmosis film device, it was treated by the ultraviolet oxidation device of the present Example. The treated clean water was further treated by known degassing device, ion adsorption device, and ultrafiltration device to obtain ultrapure water. The obtained ultrapure water has TOC of about 20 ppb. The treating speed was adjusted so as to obtain ultrapure water having TOC of about 0.5 ppb. In this case, the treating speed was 16.1 m³/h, the energy consumption of the ultraviolet oxidation device was 0.13 kWh/ m³.

### (Example 2)

Next, an ultrapure water production device shown in FIG. 7 was manufactured using the ultraviolet oxidation device obtained in Example 1. The ultrapure water production device comprises AG type reverse osmosis film device produced by GE Co., as an reverse osmosis film device, a continuous electric regeneration ion exchange device (XL type) produced by SnowPure Co., as an ion exchange device, a cartridge polisher (RT type) produced by Shin-ei Chemical Industries Co., as a mixed bed ion exchange device, NTU type ultrafiltration device produced by Nitto Denko Co., as an ultrafiltration device, and known pretreatment device including an activated carbon filter (RT type), a water softening device produced by Shin-ei Chemical Industries Co., and a filter (BL type) produced by SHINRYO AQUAIR Co.

When a clean water as a raw water was treated by the known pretreatment device, followed by adding 100 ppb of urea and treating by the ultrapure water production device of Example 2, ultrapure water having residual urea of 1 ppb or less and TOC of 1 ppb or less can be obtained.

### (Comparative Example 1)

Referred to a method of an example mentioned in JP A-10-151450, an ultraviolet oxidation device was manufactured which comprises a stainless steel cylinder with a diameter of 250 mm and a length of 1500 mm, having 24 units of low pressure ultraviolet radiation lamps each of 65 W housed therein, each ultraviolet radiation lamp radiating a light with wavelengths of 254 nm, 194 nm and 184 nm. The photocatalyst was formed of a transparent alumina plate supporting anataze type titania and was inserted into the ultraviolet oxidation device. The weight of the photocatalyst was 80 ppm relative to the inner volume of the ultraviolet oxidation device. In the same manner as in Example 1 except the ultraviolet oxidation device, a clean water was treated. That is, after the clean water was treated by a known coagulation filter device, two-bed three-column ion exchange device, reverse osmosis film device, and degassing device, it was treated by the ultraviolet oxidation device of the present Comparative Example. The treated clean water was further treated by known ion adsorption device, and ultrafiltration device to obtain ultrapure water. The treating speed was adjusted so as to obtain ultrapure water having TOC of about 0.5 ppb. In this case, the treating speed was 4.7 m³/h, the energy consumption of the ultraviolet oxidation device was 0.47 kWh/ m³.

### DESCRIPTION OF SYMBOLS

- 10: flow tank
- 10A: inlet
- 10B: outlet
- 12: photocatalyst cartridge (photocatalyst fiber)
- 12A: flat non-woven fabric
- 12B: wire screen
- 14: ultraviolet radiation lamp (ultraviolet radiation unit)
- 16: ultraviolet radiation lamp housing unit (ultraviolet radiation unit housing unit)
- 18: double pipe
- 18A: outer pipe
- 18B: inner pipe
- 18C: inflow port
- 18D: outflow port
- 20: dividing plate
- 40: reverse osmosis film device
- 42: ion exchange device
- 44: tank
- 46: ultraviolet oxidation device
- 48: mix bed ion exchange device
- 50: ultrafiltration device

## Claims

1. An ultraviolet oxidation device **characterized by** comprising:
a flow tank for flowing a water to be processed in one direction;
photocatalyst fibers arranged in the flow tank in a manner such that the water to be processed can pass therethrough;
an ultraviolet radiating unit which can radiates ultraviolet rays; and
an ultraviolet radiating unit housing unit which houses the ultraviolet radiating unit and is arranged to occupy an entire cross-section of the flow tank intersecting with flowing direction of the water to be processed in the flow tank;
wherein the ultraviolet radiating unit housing unit is constructed such that the water to be processed flows toward the ultraviolet radiating unit from an upstream side, and after flowing in the housing unit, the water to be processed flows out to a downstream side, and the ultraviolet radiating unit housing unit is formed of a material that allows the ultraviolet rays from the ultraviolet radiating unit to radiate the photocatalyst fibers.

2. The ultraviolet oxidation device according to claim 1, **characterized in that** the ultraviolet radiating unit housing unit includes an inner pipe for housing the ultraviolet radiating unit and an outer pipe covering the inner pipe.

3. The ultraviolet oxidation device according to claim 2, **characterized in that** a space between the inner pipe and the outer pipe is a range of 1 to 10 mm in a radial direction.

4. The ultraviolet oxidation device according to claim 2 or 3, **characterized in that** the inner pipe and the outer pipe are formed of a material which allows the ultraviolet rays having wavelength of 180 to 190 nm and wavelength of 250 to 260 nm to transmit therethrough.

5. The ultraviolet oxidation device according to any one of claims 1 to 4, **characterized in that** the ultraviolet radiating unit is constituted such that it can radiate ultraviolet rays having both of a peak wavelength of 180 to 190 nm and a peak wavelength of 250 to 260 nm.

6. The ultraviolet oxidation device according to any one of claims 1 to 5, **characterized in that** the ultraviolet radiating unit is formed into an elongated shape, the photocatalyst fibers are formed into a flat plate, and a longitudinal direction of the ultraviolet radiating unit is parallel with a plane direction of the photocatalyst fibers.

7. An ultrapure water production device **characterized by** comprising:
a reverse osmosis film device for removing impurities in a water to be processed;
an ion exchange device for removing ion components in the water to be processed in which the impurities are removed, which is arranged downstream the reverse osmosis film device;
the ultraviolet oxidation device recited in any one of claims 1 to 6, for decomposing organic components in the water to be processed in which the ion components are removed, which is arranged downstream the ion exchange device;
a mixed bed ion exchange device for removing ion components generated in the water to be processed by decomposition of the organic components by the ultraviolet oxidation device, which is arranged downstream the ultraviolet oxidation device, and
an ultrafiltration device for removing particulate matters in the water to be processed generated by treatment through process after step using the reverse osmosis film device, which is arranged downstream the mixed bed ion exchange device.

8. The ultrapure water production device according to claim 7, **characterized by** further comprising a degassing device for removing a gas in the water to be processed, which is arranged upstream the ultrafiltration device.

9. The ultrapure water production device according to claim 8, **characterized in that** the degassing device is arranged at least between the reverse osmosis film device and the ion exchange device, and between the ion exchange device and the ultrafiltration device.

10. An ultraviolet oxidation method for oxidation decomposing organic materials contained in a water to be processed which flows in a flow tank including photocatalyst fibers which allows the water to be processed to pass therethrough, an ultraviolet radiating unit which can radiates ultraviolet rays, and an ultraviolet radiating unit housing unit which houses the ultraviolet radiating unit, and though which the water to be processed can flow, **characterized by** comprising:
allowing the water to be processed to pass through the photocatalyst fibers while the photocatalyst fibers are irradiated with ultraviolet rays from the ultraviolet radiating unit; and
allowing the water to be processed to pass through the ultraviolet radiating unit housing unit while the water to be processed is irradiated with ultraviolet rays from the ultraviolet radiating unit.

11. An ultrapure water production method comprising:
an impurity removing step for removing impurities in a water to be processed;
a first ion component removing step for removing ion components in the water to be processed, which is treated in the impurity removing step;
an organic component decomposing step for decomposing organic components in the water to be processed, which is treated in the first ion component removing step, by the ultraviolet oxidation method recited in claim 10;
a second ion component removing step for removing ion components in the water to be processed, generated in the organic component decomposing step; and
a particulate matter removing step for removing a particulate matter in the water to be treated, generated through process after the impurity removing step.
